# EUROPÄISCHE PATENTSCHRIFT

(11) **EP 1 613 167 B1**
(45) Veröffentlichungstag und Bekanntmachung des Hinweises auf die Patenterteilung: **19.07.2006**
(21) Anmeldenummer: 04704602.4
(22) Anmeldetag: 23.01.2004
(51) Int. Cl.: A23C 3/033, A01K 9/00, B67D 5/62

(54) **VORRICHTUNG ZUM BEREITSTELLEN VON FLÜSSIGEM NAHRUNGSMITTEL FÜR TIERE**
DEVICE FOR DISPENSING LIQUID FEED FOR ANIMALS
DISPOSITIF POUR METTRE A DISPOSITION UN ALIMENT LIQUIDE DESTINE A DES ANIMAUX

(30) Priorität: 08.04.2003 DE 10316258; 24.06.2003 DE 10328517
(43) Veröffentlichungstag der Anmeldung: 11.01.2006
(73) Patentinhaber: Förster, Martin, 78234 Engen (DE)
(72) Erfinder: Förster, Martin, 78234 Engen (DE)
(74) Vertreter: Weiss, Peter
(86) Internationale Anmeldenummer: PCT/EP2004/000556
(87) Internationale Veröffentlichungsnummer: WO 2004/089095

(56) Entgegenhaltungen:
- EP-A- 0 663 577
- WO-A-00/21359
- DE-U- 8 910 932
- FR-A- 2 717 347
- GB-A- 190 810
- GB-A- 329 193
- GB-A- 2 052 949

## Beschreibung

Die vorliegende Erfindung betrifft eine Vorrichtung zum Bereitstellen von flüssigem Nahrungsmittel für Tiere aus einem Vorratsbehälter an einen Tränkeautomaten oder an eine Entnahmestelle, wobei zwischen dem Vorratsbehälter und dem Tränkeautomaten oder der Entnahmestelle eine Einrichtung zum Erhitzen und anschliessenden Kühlen des flüssigen Nahrungsmittels vorgesehen ist.

Derartige Vorrichtungen sind in vielfältiger Form und Ausführung im Markt bekannt und erhältlich.

Nachteilig hierbei ist, dass in herkömmlichen Vorratsbehältern flüssiges Nahrungsmittel für Tiere, insbesondere Milch, unter ständiger Kühlung bevorratet wird. Dieses flüssige Nahrungsmittel, insbesondere Milch, enthält Keime und Verunreinigungen, die bei der Tierfütterung, insbesondere bei der Kälbermast unter Umständen zu Erkrankungen des Tieres bzw. zum verderben des Nahrungsmittels führen kann, was unerwünscht ist.

Zwar könnte das flüssige Nahrungsmittel, insbesondere die Milch über herkömmliche Pasteurisierungsautomaten pasteurisiert werden, jedoch sind derartige Vorrichtungen nicht geeignet, um diese bspw. jedem Landwirt vor Ort bereit zu stellen. Diese sind teuer in der Anschaffung, kostenintensiv zu warten und zu betreiben und haben einen äusserst hohen Energieverbrauch.

Die GB 190 810 offenbart ein Verfahren und eine Vorrichtung zum Sterilisieren von Flüssigkeiten. Dabei wird das flüssige Lebensmittel durch ein Heizsystem 3 geführt und g4elangt dann in ein Kühlsystem 2 und anschliessendes Heizsystem 3 einen Auffangbehälter.

Die GB 329 193 offenbart ein Verfahren sowie eine Vorrichtung zum Pasteurisieren von Milch, bei welcher die Milch über eine entsprechende Leitung vorerhitzt, pasteurisiert und anschliessend gekühlt wird.

Ein ähnliches Verfahren sowie eine ähnliche Vorrichtung sind aus der GB 2 052 949 A aufgezeigt. Dort wird die zu pasteurisierende Milch über einen Wärmetauscher erhitzt und in einem separaten Kühler abgekühlt und wird dann entsprechenden Abfüllmaschinen übergeben.

Die DE 89 10 932 offenbart eine Vorrichtung zum Aufheizen von Milch für Tränkeautomaten, bei welcher in einem Behälter eine Spirale eingesetzt ist, die mit der Milch durchströmt wird. Die Spirale wird von erwärmter Flüssigkeit im Behälter umgeben.

Der vorliegenden Erfindung liegt die Aufgabe zugrunde, eine Vorrichtung zum Bereitstellen von flüssigen Nahrungsmitteln für Tiere zu schaffen, welche die genannten Nachteile beseitigt, und mit welcher auf einfache und kostengünstige Weise ein Nahrungsmittel nahezu keimfrei dem Tier zur Verfügung gestellt werden kann.

Zur Lösung dieser Aufgabe führt der Hauptanspruch, dass nach dem Erhitzen auf Pasteurisierungstemperatur und dem anschliessenden Abkühlen im zumindest einen Primärwärmetauscher das flüssige Nahrungsmittel über eine Nahrungsmittelleitung dem Tränkeautomat und/oder der Entnahmestelle zuführbar ist, wobei die Einrichtung aus zumindest einem Primär- und einem Sekundärwärmetauscher gebildet ist und dem Primär- und dem Sekundärwärmetauscher jeweils zumindest eine Umwälzeinrichtung zugeordnet ist, wobei in dem Primärwärmetauscher eine Vorheizspirale eingesetzt ist, welche über die Nahrungsmittelleitung mit dem Vorratsbehälter einends verbunden ist und andernends über eine Verbindungsleitung in den Sekundärwärmetauscher einmündet.

Bei der vorliegenden Erfindung ist die Einrichtung zum Pasteurisieren, d. h. Erhitzen und anschliessenden Kühlen des flüssigen Nahrungsmittels, unmittelbar dem Vorratsbehälter nachgeschaltet. Diese besteht im wesentlichen aus zumindest einem Primärwärmetauscher und einem Sekundärwärmetauscher.

In dem Primärwärmetauscher ist eine Vorheizspirale eingesetzt, durch welchen das kalte bzw. gekühlte Nahrungsmittel des Vorratsbehälters strömt und anschliessend einer Pasteurisierungsspirale des Sekundärwärmetauschers zugeführt wird. Im Sekundärwärmetauscher wird die Trägerflüssigkeit, bspw. Wasser, auf ca. 75°C bis 85°C erhitzt, und erhitzt auf diese Weise das die Pasteurisierungsspirale durchströmende Nahrungsmittel auf Pasteurisierungstemperatur.

Anschliessend wird das Nahrungsmittel über die Nahrungsmittelleitung über eine Verbindungsleitung in eine in den Primärwärmetauscher eingesetzte Abkühlspirale geführt und anschliessend aus der Einrichtung, insbesondere aus dem Primärwärmetauscher einem Tränkeautomaten mit nachgeschalteter Entnahmestelle oder direkt einer Entnahmestelle zugeführt. Dabei werden über entsprechende Umwälzeinrichtungen, Umwälzpumpen oder mechanisch rotierende Umwälzflügel od. dgl. die Trägerflüssigkeiten in dem Primärwärmetauscher und Sekundärwärmetauscher permanent bewegt.

Wichtig ist bei der vorliegenden Erfindung, dass das aufgeheizte Nahrungsmittel auf Pasteurisierungstemperatur bspw. einer Temperatur von 75°C bis 85°C, bevorzugt 80°C, aus dem Sekundärwärmetauscher austritt und in den zumindest einen Primärwärmetauscher zum Abkühlen in dessen Abkühlspirale eintritt. Hierdurch wird die Wärme abgegeben, so dass eine Tränketemperatur, insbesondere eine Tränkeaustrittstemperatur des Nahrungsmittels aus dem Primärwärmetauscher von etwa 35°C bis 45°C erreicht wird. Die von der Abkühlspirale abgegebenen Wärme wird zum Vorwärmen bzw. Aufheizen des Primärwärmetauschers und damit auch der Vorheizspirale genutzt. Auf diese Weise lässt sich mittels einer Energierückgewinnung gleichzeitig das pasteurisierte Nahrungsmittel auf Tränketemperatur abkühlen. Dies spart erheblich Energie ein, so dass im wesentlichen die Energie zum Betreiben der Umwälzeinrichtungen und zum Erhitzen mittels einer Heizeinrichtung des Sekundärwärmetauschers notwendig ist, um direkt das aus dem Vorratsbehälter gekühlt gelagerte, flüssige Nahrungsmittel zum Pasteurisieren und auf Tränketemperatur einer Entnahmestelle und/oder einem Tränkeautomaten auf abgekühlter Tränketemperatur zur Verfügung zu stellen.

Weiter soll im Rahmen der vorliegenden Erfindung liegen, dass bspw. dem Primärwärmetauscher zur Temperaturkalibrierung und Regelung eine zusätzliche Heizeinrichtung vorgesehen sein kann. Diese Heizeinrichtung dient auch einem Erhitzen der Trägerflüssigkeit beim erstmaligen Entnehmen, Vorwärmen, bzw. Anwärmen des Primärtauschers auf Betriebstemperatur.

Über entsprechende Temperatursensoren, die dem Vorratsbehälter, dem Primär- und Sekundärwärmetauscher, sowie dem Tränkeautomaten und der Entnahmestelle zugeordnet sein können, lässt sich das Vorwärmen, das Pasteurisieren und das anschliessende Abkühlen auf Tränketemperatur exakt regeln und eine wählbare Tränketemperatur bei einem gewünschten und einstellbaren auszubringenden Nahrungsmittel regeln. Auch in Abhängigkeit der Pasteurisierungs- und/oder Durchströmgeschwindigkeit lässt sich die Betriebstemperatur von Primär- und Sekundärwärmetauscher regeln.

In einem weiteren Ausführungsbeispiel der vorliegenden Erfindung ist daran gedacht, zumindest zwei hintereinander geschaltete Primärwärmetauscher dem Sekundärwärmetauscher vorzuschalten.

Dies hat den Vorteil, dass in unterschiedlichen und wählbaren Temperaturstufen einerseits eine Vorwärmung und andererseits eine Abkühlung des pasteurisierten Nahrungsmittel erfolgen kann. Zudem lässt sich an jeder Stufe bzw. an jedem Primärwärmetauscher in wählbaren Austrittstemperaturen eine Entnahme für eine Entnahmestelle oder einen Tränkeautomaten, einen Aufnahmebehälter zum Kühlen etc. abzweigen.

Ferner hat sich als vorteilhaft erwiesen, in eine entsprechende Pasteurisierungsspirale oder Abkühlspirale zumindest einen Temperatursensor integriert einzusetzen, um eine exakte Temperatur nach dem Erhitzen auf Pasteurisierungstemperatur bzw. Austrittstemperatur aus dem jeweiligen Primärwärmetauscher zu erhalten.

Auch soll im Austrittsbereich des Sekundärwärmetauschers ein Temperatursensor in die Pasteurisierungsspirale integriert sein, um nach einer bestimmten Verweilzeit noch eine Austrittspasteurisierungstemperatur zu kontrollieren und ggf. nachzuregeln.

Zudem hat sich als vorteilhaft erwiesen, an den ersten Primärwärmetauscher, insbesondere an dessen Nahrungsmittelleitung im Auslassbereich einen Bypass vorzusehen, der eine Verbindung zum Vorratsbehälter herstellt. Dann lässt sich beispielsweise beim Reinigen eine Zirkulationsreinigung bewerkstelligen, wobei im Rahmen der vorliegenden Erfindung auch liegen soll, dass die Reinigung pulsiert, in einzelnen Pulsen erfolgen soll. Ebenfalls soll auch ein pulsiertes oder kontinuierliches Zuführen von Nahrungsmittel durch die Primär- und Sekundärwärmetauscher möglich sein, wobei insbesondere beim pulsierten Durchströmen des Nahrungsmittels durch Primär- und Sekundärwärmetauscher ein Wärmeaustausch optimiert ist. Gleichzeitig werden Ablagerungen reduziert, was ebenfalls von Vorteil ist. Auch beim Reinigungsprozess können die ggf. entstehenden Ablagerungen optimiert aus den Leitungen ausgetragen werden. Dies soll ebenfalls im Rahmen der vorliegenden Erfindung liegen.

Bei der vorliegenden Erfindung ist eine Vorrichtung geschaffen, welche in einer äusserst kompakten Bauweise hergestellt werden kann. Diese lässt sich sehr universell einsetzen, insbesondere für einen Kleinmengenbereich. Durch die kleine und kompakte Bauweise sind eine Vielzahl von universellen Anwendungsmöglichkeiten denkbar. Eine derartige Vorrichtung ist daher äusserst flexibel, lässt sich vollautomatisiert steuern und regeln, was insbesondere auch den Reinigungsprozess betrifft.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine schematisch dargestellte Draufsicht einer erfindungsgemässen Vorrichtung zum Pasteurisieren und Bereitstellen von flüssigen Nahrungsmittel für Tiere;
Figur 2 eine schematisch dargestellte Draufsicht auf ein weiteres Ausführungsbeispiel der Vorrichtung zum Pasteurisieren und Bereitstellen von flüssigen Nahrungsmittel für Tiere gemäss Figur 1;

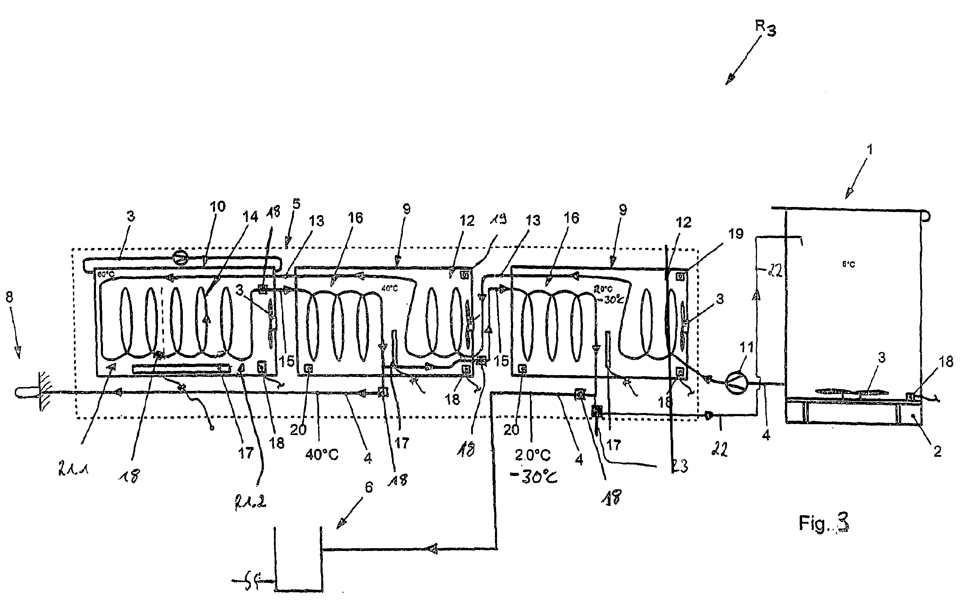

Figur 3 eine schematisch dargestellte Draufsicht auf ein weiteres Ausführungsbeispiel der Vorrichtung zum Pasteurisieren und Bereitstellen von flüssigen Nahrungsmittel für Tiere gemäss den Figuren 1 und 2.

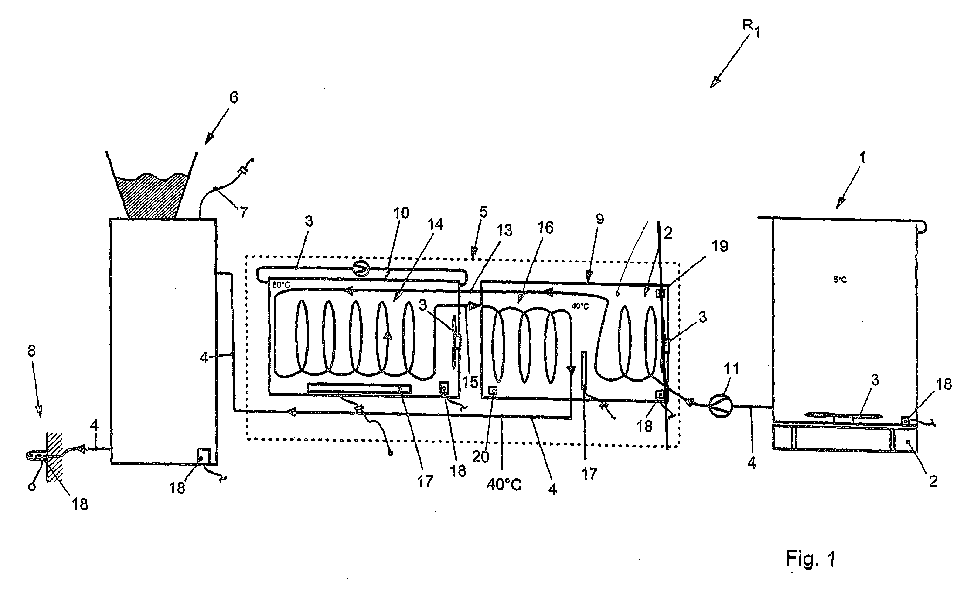

Gemäss Figur 1 weist eine erfindungsgemässe Vorrichtung R₁ zum Pasteurisieren und Bereitstellen von flüssigem Nahrungsmittel für Tiere einen Vorratsbehälter 1 auf, in welchem das flüssige Nahrungsmittel, bzw. Milch bei einer Temperatur von 5°C eingelagert wird. Dem Vorratsbehälter 1 ist eine hier nicht näher dargestellte Kühleinrichtung 2 und eine Umwälzeinrichtung 3 zugeordnet.

Unter ständigem Rühren wird das flüssige Nahrungsmittel, insbesondere Milch, gekühlt und zur weiteren Bereitstellung im Vorratsbehälter 1 gelagert.

Damit das flüssige Nahrungsmittel für Tiere, insbesondere die Milch von Keimen befreit wird, wird dieses über eine Nahrungsmittelleitung 4 einer Einrichtung 5 zum Pasteurisieren und anschliessenden Abkühlen des Nahrungsmittels auf eine Tränketemperatur zugeführt.

Wie es insbesondere in Figur 1 aufgezeigt ist, wird das in der Einrichtung 5 pasteurisierte flüssige Nahrungsmittel anschliessend einem Tränkeautomaten 6 zugeführt, dort ggf. über eine Wasserleitung 7 mit Wasser angereichert und ggf. mit entsprechenden Nahrungsmittelzusätzen angereichert und über eine weitere Nahrungsmittelleitung 4 einer Entnahmestelle 8 bzw. einem Nuckel od. dgl. zugeführt.

Wichtig ist bei der vorliegenden Erfindung, dass die Einrichtung 5 aus einem Primärwärmetauscher 9 und einem Sekundärwärmetauscher 10 gebildet ist. Aus dem Vorratsbehälter 1 wird flüssiges Nahrungsmittel über die Nahrungsmittelleitung 4 mit ggf. dazwischen eingesetzter Förderpumpe 11 an eine in den Primärwärmetauscher 9 eingesetzte Vorheizspirale 12 transportiert. Von dort gelangt das Nahrungsmittel über die Nahrungsmittelleitung 4 über eine Verbindungsleitung 13 in den Sekundärwärmetauscher 10, in welchem eine Pasteurisierungsspirale 14 eingesetzt ist, welche über eine weitere Verbindungsleitung 15 an eine in den Primärwärmetauscher 9 eingesetzte Abkühlspirale 16 anschliesst. Im Anschluss an die Abkühlspirale 16 tritt die Nahrungsmittelleitung 4 aus dem Primärwärmetauscher 9 aus und steht mit dem Tränkeautomaten 6 in Verbindung. Von dort wird über eine weitere Nahrungsmittelleitung 4 das flüssige Nahrungsmittel, ggf. versetzt mit zusätzlichen Nährstoffen, Medikamenten oder Wasser der Entnahmestelle 8 zugeführt.

Ferner ist dem Primärwärmetauscher 9 und dem Sekundärwärmetauscher 10 jeweils eine Heizeinrichtung 17 zugeordnet, wobei die Heizeinrichtung 17 des Primärwärmetauschers 9 lediglich zum erstmaligen Vorheizen und ggf. zur Regelung oder Nachregelung der Vorheiztemperatur eingesetzt wird.

Ferner können, wie es insbesondere in Figur 1 angedeutet ist, dem Vorratsbehälter 1, dem Primärwärmetauscher 9 und Sekundärwärmetauscher 10, sowie auch dem Tränkeautomaten 6 und der Entnahmestelle 8 Temperatursensoren 18 zugeordnet sein, um die jeweiligen Temperaturen des flüssigen Nahrungsmittels bzw. Betriebszustände des Primärwärmetauschers 9 und Sekundärwärmetauschers 10 zu bestimmen und zu regeln.

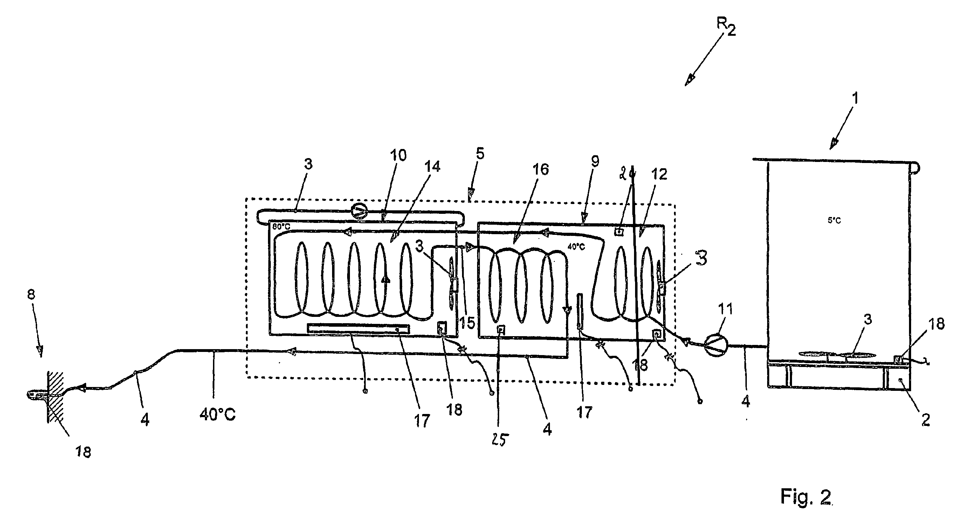

Damit eine Umwälzung in dem Primärwärmetauscher 9 und Sekundärwärmetauscher 10 optimiert ist, können unterschiedliche Umwälzeinrichtungen 3, wie sie in den Figuren 1 und 2 angedeutet sind, eingesetzt sein.

Vorzugsweise erfolgt eine Umwälzung der Trägerflüssigkeit im zumindest einen Primärwärmetauscher 9 und/oder Sekundärwärmetauscher 10 im Umwälzungsverfahren zu dem in der Nahrungsmittelleitung 4 transportierten, flüssigem Nahrungsmittel.

Ferner können dem Primärwärmetauscher 9, wie hier angedeutet, zusätzlich ein Einlass 19 und ein Auslass 20 vorgesehen sein, die bevorzugt an unterschiedlichen Orten im Primärwärmetauscher 9 angeordnet sind. Über den Einlass 19 lässt sich bspw. temperiertes Wasser bzw. Trägerflüssigkeit dem Primärwärmetauscher 9 zuführen, welche entsprechend über den Auslass 20 abgeführt wird.

Zwischen Einlass 19 und Auslass 20 können entsprechende, hier nicht näher dargestellte Ventile sowie Erhitzer oder Kühlgeräte anschliessen, um die Trägerflüssigkeit im Primärwärmetauscher 9 zusätzlich zu kühlen oder zu erhitzen.

Eine zusätzliche Kühlung kann dann bspw. erforderlich sein, wenn die Temperatur des Nahrungsmittels im Vorratsbehälter 1 höher ist als bspw. 5° bis 8°, so dass eine zusätzliche Kühlung um die Austrittstemperatur konstant zu halten oder zu regeln, erforderlich sein kann.

Gleichzeitig kann auch daran gedacht sein, dass ein Vorheizen bzw. Vortemperieren des Primärwärmetauscher 9 über den Einlass 19 und Auslass 20 durch Zuführen von erhitzter bzw. erwärmter Flüssigkeit erfolgen kann. Dies soll ebenfalls im Rahmen der vorliegenden Erfindung liegen. Dabei können entsprechende hier nicht näher dargestellte Umwälzeinrichtungen, Heiz- oder Kühleinrichtungen an den Einlass 19 bzw. Auslass 20 anschliessen, die mit einer hier nicht dargestellten oder aufgezeigten Steuerung in Verbindung stehen.

Im Ausführungsbeispiel gemäss Figur 2 ist eine Vorrichtung R₂ beschrieben, die in etwa der Vorrichtung gemäss Figur 1 entspricht.

Unterschiedlich ist lediglich, dass die Nahrungsmittelleitung 4 nach Austritt aus dem Primärwärmetauscher 9 unmittelbar an eine Entnahmestelle 8 anschliesst, und das flüssige Nahrungsmittel oder die Milch mit einer Tränketemperatur von etwa 40°C dem Tier direkt bereit gestellt werden kann.

Dem Primärwärmetauscher 9 kann zusätzlich ein Zulauf 24 sowie ein Ablauf 25 zugeordnet sein, der dem zusätzlichen Abkühlen bei der Zufuhr von beispielsweise kaltem Wasser in die Trägerflüssigkeit dient. Dies soll ebenfalls im Rahmen der vorliegenden Erfindung liegen.

### Die Funktionsweise der vorliegenden Erfindung ist folgende:

Bei der vorliegende Erfindung wird das flüssige Nahrungsmittel, vorzugsweise Milch, in dem Vorratsbehälter 1 gekühlt bei etwa 5°C bevorratet und kann permanent oder in Intervallen mittels der Umwälzeinrichtung 3 umgewälzt, so dass sich keine Ablagerungen bilden und ein homogenes Gemisch an flüssigen Nahrungsmitteln oder Milch erhalten bleibt.

Damit das flüssige Nahrungsmittel pasteurisiert werden kann, wird dieses lediglich zur Vorwärmung durch einen Primärwärmetauscher 9, insbesondere durch dessen Vorheizspirale 12 geführt und gelangt von dort aus direkt in den Sekundärwärmetauscher 10 zur Erhitzung auf eine Pasteurisierungstemperatur von ca. 75°C bis 85°C, vorzugsweise 80°C. In diesem Sekundärwärmetauscher 10 wird das flüssige Nahrungsmittel pasteurisiert, so dass die wesentlichen Keime im Nahrungsmittel hierdurch abgetötet werden.

Das sehr heisse, flüssige Nahrungsmittel wird dann vom Sekundärwärmetauscher 10, insbesondere bei Austritt aus dessen Pasteurisierungsspirale 14 wieder dem Primärwärmetauscher 9, insbesondere in dessen Abkühlspirale 16 zugeführt und gelangt von dort direkt zur Entnahmestelle 8, wie es in Figur 2 dargestellt ist, oder zu einem Tränkeautomaten 6, siehe Figur 1, und danach, ggf. unter Beimischung weiterer Lebensmittel, zur Entnahmestelle 8.

Wichtig ist, dass bei Austritt des flüssigen Nahrungsmittels aus der Pasteurisierungsspirale 14 und durch Eintritt in den Primärwärmetauscher 9 das flüssige Nahrungsmittel dort auf eine Tränketemperatur von etwa 35°C bis 45°C, vorzugsweise 40°C abgekühlt wird. Da gleichzeitig im Primärwärmetauscher 9 über die zusätzlich eingesetzte Vorheizspirale 12 das 5°C kalte Nahrungsmittel durchgeleitet wird, findet ein Wärmeaustausch zwischen der Abkühlspirale 16 und der Vorheizspirale 12 bei ständiger Umwälzung der Trägerflüssigkeit im Primärwärmetauscher 9 statt.

Es erfolgt hiermit eine Wärmerückgewinnung durch das Abkühlen des Nahrungsmittels bzw. durch Abgabe von Wärme des pasteurisierten Nahrungsmittels über die Abkühlspirale 16 in dem Primärwärmetauscher 9. Diese Abwärme wird dazu benutzt, das kalte, gekühlte, flüssige Nahrungsmittel aus dem Vorratsbehälter 1 über die Vorheizspirale 12 im Primärwärmetauscher 9 auf eine Vorwärmtemperatur von etwa 35°C bis 45°C, vorzugsweise 40°C zu erhitzen. Hierdurch wird durch die Energierückgewinnung ohne zusätzliches Zuführen von Energie ein Abkühlen des pasteurisierten Nahrungsmittels und ein gleichzeitiges Aufwärmen bzw. Vorwärmen des zu pasteurisierenden Nahrungsmittels gewährleistet. Hierdurch muss lediglich im wesentlichen Energie zum Pasteurisieren für die Heizeinrichtung 17 dem Sekundärwärmetauscher 10 zugeführt werden.

Im letzten Ausführungsbeispiel der vorliegenden Erfindung ist eine Vorrichtung R₃ aufgezeigt, die in etwa den Vorrichtungen R₁, R₂ gemäss den Figuren 1 und 2 entspricht. Unterschiedlich ist hier, dass in der Einrichtung 5 anstelle des ersten Primärwärmetauschers zwei Primärwärmetauscher 9 eingesetzt sind, und erst im Anschluss an zwei Primärwärmetauscher 9 der Sekundärwärmetauscher 10 in vorbeschriebener Weise anschliesst.

Ferner ist der Sekundärwärmetauscher 10, insbesondere die Pasteurisierungsspirale 14 in zwei Bereiche 21.1, 21.2 unterteilt, die im vorliegenden Ausführungsbeispiel durch eine gestrichelt dargestellte Linie angedeutet sind.

Die in den beiden vorgeschalteten Primärwärmetauscher 9 vorgewärmte Flüssigkeit bzw. Nahrungsmittel, wird im Bereich 21.1 auf Pasteurisierungstemperatur erwärmt, wobei nahe des Austritts des Bereiches 21.1 in die Pasteurisierungsspirale 14 ein Temperatursensor 18 eingesetzt ist, der permanent und ständig, über eine entsprechende, hier nicht näher dargestellte Steuerung die Temperatur regelt, steuert und die Austrittstemperatur des Nahrungsmittels des Bereiches 21.1 misst.

Ist die Pasteurisierungstemperatur von beispielsweise 80°C erreicht, so wird das erhitzte Nahrungsmittel durch die Pasteurisierungsspirale 14 durch den Bereich 21.2 geleitet, bis es eine bestimmte Verweildauer im Bereich 21.2 besitzt, um die Pasteurisierungszeit zur gewünschten und geforderten Pasteurisierung zu absolvieren. Anschliessend tritt das pasteurisierte Nahrungsmittel aus dem Sekundärwärmetauscher 10 aus, wobei im Austrittsbereich, entweder innen oder aussen in die Pasteurisierungsspirale 14 ein weiterer Temperatursensor 18 eingesetzt ist, um die Austrittstemperatur, d.h., nach einer Verweildauer des Nahrungsmittels zu überprüfen bzw. ggf. den Pasteurisierungsprozess zu unterbrechen und einen Alarm auszulösen, sollte die Austrittstemperatur nicht der Pasteurisierungstemperatur entsprechen.

Anschliessend gelangt das Nahrungsmittel in den zweiten Primärwärmetauscher 9 und wird dort in oben beschriebener Weise auf eine Austritts- oder Weiterverarbeitungstemperatur von etwa 40°C abgekühlt, wobei gleichzeitig die abgegebene Wärme zur Vorwärmung des zuführenden Nahrungsmittels für den Sekundärwärmetauscher 10 dient. An dieser Stelle kann beispielsweise nach dem Abkühlen des Nahrungsmittels auf 40°C eine Entnahme an eine Entnahmestelle 8 erfolgen. Es ist jedoch auch denkbar, wie es im vorliegenden Ausführungsbeispiel aufgezeigt ist, das Nahrungsmittel dem zweiten Primärwärmetauscher 9 zuzuführen, um das in etwa 40°C warme Nahrungsmittel weiter zu kühlen auf ca. 20°C bis 30°C im zweiten Primärwärmetauscher. Von dort kann das Nahrungsmittel dann beispielsweise einem Tränkeautomat 6 oder einem Behälter od. dgl. zur weiteren Kühlung zugeführt werden. Auch hier soll im Rahmen der vorliegenden Erfindung liegen, dass insbesondere die Austrittstemperatur durch direkt in die Abkühlspiralen 16 eingesetzte Temperatursensoren 18 die Austrittstemperatur beim jeweiligen Primärwärmetauscher direkt überprüft und ggf. nachgeregelt werden kann.

Im Rahmen der vorliegenden Erfindung soll jedoch auch liegen, dass beispielsweise das Nahrungsmittel kontinuierlich in einem kontinuierlichen Prozess durch den zumindest einen Primärwärmetauscher 9 und den anschliessenden Sekundärwärmetauscher 10 geführt wird. Dabei sei daran gedacht, dass zumindest ein Primärwärmetauscher oder auch eine Mehrzahl von Primärwärmetauscher 9 nacheinander vorgesehen sind, um das Nahrungsmittel vorzuwärmen bzw. das pasteurisierte Nahrungsmittel abzukühlen.

Ferner hat sich als besonders vorteilhaft erwiesen, dass das Nahrungsmittel pulsiert durch den zumindest einen Primärwärmetauscher 9 und den daran anschliessenden Sekundärwärmetauscher 10 geführt wird, damit ein Wärmeaustausch optimiert wird. Hierdurch erfolgt eine bessere Durchdringung und ein besserer Wärmeaustausch in dem zumindest einen Primär- und Sekundärwärmetauscher 9, 10.

Zudem wird gewährleistet, dass durch ein pulsiertes Fördern des Nahrungsmittels durch die Vorrichtung eine verbesserte Durchmischung in den Pasteurisierungsspiralen 14 bzw. Abkühlspiralen 16 erfolgt, und zudem eine Anreicherung von Ablagerungen in den Pasteurisierungsspiralen 14 bzw. Abkühlspiralen 16 verringert wird.

Auch soll daran gedacht sein, dass beim Durchlaufen von Reinigungsmittel, welches über einen Bypass 22 zirkulierend durch die Primärwärmetauscher 9 und den Sekundärwärmetauscher 10 sowie den Vorratsbehälter 1 geleitet werden kann, eine zirkulierende Reinigung erfolgen kann. Dabei soll insbesondere auch beim Reinigungsprozess eine pulsierte Reinigung denkbar sein. Reinigungsflüssigkeit wird pulsiert durch zumindest einen Primärwärmetauscher 9 und den Sekundärwärmetauscher 10 transportiert, um die Verunreinigungen und Ablagerungen optimiert aus der Pasteurisierungsspirale 14 und Abkühlspirale 16 auszubringen. Ein Ablauf 23 kann über hier nicht näher dargestellte und bezifferte Ventile in die Nahrungsmittelleitung 4 des einen oder auch des anderen Primärwärmetauschers 9 eingesetzt sein, um die Reinigungsflüssigkeit aus der Vorrichtung R₃ abzulassen.

Ein Ablassen von Reinigungsflüssigkeit kann jedoch auch durch einen hier nicht näher dargestellten Ablass im Vorratsbehälter 1 erfolgen.

### Positionszahlenliste

| | | | | | |
|---|---|---|---|---|---|
| 1 | Vorratsbehälter | 34 | | 67 | |
| 2 | Kühleinrichtung | 35 | | 68 | |
| 3 | Umwälzeinrichtung | 36 | | 69 | |
| 4 | Nahrungsmittelleitung | 37 | | 70 | |
| 5 | Einrichtung | 38 | | 71 | |
| 6 | Tränkeautomat | 39 | | 72 | |
| 7 | Wasserleitung | 40 | | 73 | |
| 8 | Entnahmestelle | 41 | | 74 | |
| 9 | Primärwärmetauscher | 42 | | 75 | |
| 10 | Sekundärwärmetauscher | 43 | | 76 | |
| 11 | Förderpumpe | 44 | | 77 | |
| 12 | Vorheizspirale | 45 | | 78 | |
| 13 | Verbindungsleitung | 46 | | 79 | |
| 14 | Pasteurisierungs-spirale | 47 | | | |
| 15 | Verbindungsleitung | 48 | | | |
| 16 | Abkühlspirale | 49 | | | |
| 17 | Heizeinrichtung | 50 | | R₁ | Vorrichtung |
| 18 | Temperatursensor | 51 | | R₂ | Vorrichtung |
| 19 | Einlass | 52 | | | |
| 20 | Auslass | 53 | | | |
| 21 | Bereich | 54 | | | |
| 22 | Bypass | 55 | | | |
| 23 | Ablauf | 56 | | | |
| 24 | Zulauf | 57 | | | |
| 25 | Ablauf | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Vorrichtung zum Bereitstellen von flüssigem Nahrungsmittel für Tiere aus einem Vorratsbehälter (1) an einen Tränkeautomaten (6) oder an eine Entnahmestelle (8), wobei zwischen dem Vorratsbehälter (1) und dem Tränkeautomaten (6) oder der Entnahmestelle (8) eine Einrichtung (5) zum Erhitzen und anschliessenden Kühlen des flüssigen Nahrungsmittels vorgesehen ist, wobei
nach dem Erhitzen auf Pasteurisierungstemperatur und dem anschliessenden Abkühlen im zumindest einen Primärwärmetauscher (9) das flüssige Nahrungsmittel über eine Nahrungsmittelleitung (4) dem Tränkeautomat (6) und/oder der Entnahmestelle (8) zuführbar ist und wobei die Einrichtung (5) aus zumindest einem Primär- und einem Sekundärwärmetauscher (9, 10) gebildet ist ,**dadurch gekennzeichnet, dass** dem Primär- und dem Sekundärwärmetauscher (9, 10) jeweils zumindest eine Umwälzeinrichtung (3) zugeordnet ist, wobei in dem Primärwärmetauscher (9) eine Vorheizspirale (12) eingesetzt ist, welche über die Nahrungsmittelleitung (4) mit dem Vorratsbehälter (1) einends verbunden ist und andernends über eine Verbindungsleitung (13) in den Sekundärwärmetauscher (10) einmündet.

2. Vorrichtung nach Anspruch 1, **dadurch gekennzeichnet, dass** das flüssige Nahrungsmittel aus dem vorratsbehälter (1) im zumindest einen Primärwärmetauscher (9) auf eine Vorwärmtemperatur und im Sekundärwärmetauscher (10) auf eine Pasteurisierungstemperatur erwärmbar ist, wobei zum anschliessenden Abkühlen dieses durch den zumindest einen Primärwärmetauscher (9) zum gleichzeitigen Erwärmen dessen Trägerflüssigkeit strömt.

3. Vorrichtung nach Anspruch 1 oder 2, **dadurch gekennzeichnet, dass** das Nahrungsmittel vom einen oder anderen Primärwärmetauscher (9) entnehmbar ist.

4. Vorrichtung nach wenigstens einem der Ansprüche 1 bis 3, **dadurch gekennzeichnet, dass** die Verbindungsleitung (13) an eine Pasteurisierungsspirale (14) anschliesst, die aus dem Sekundärwärmetauscher (10) über eine weitere Verbindungsleitung (15) in den zumindest einen Primärwärmetauscher (9) geführt ist und dort an eine Abkühlspirale (16) anachliesst, an welche der Tränkeautomat (6) und/oder die Entnahmestelle (8) über eine weitere Nahrungsmittelleitung (4) anschlieset.

5. Vorrichtung nach wenigstens einem der Ansprüche 1 bis 4, **dadurch gekennzeichnet, dass** dem zumindest einen Primär- und ggf, dem Sekundärwärmetauscher (9, 10) jeweils eine Heizeinrichtung (17) zugeordnet ist.

6. Vorrichtung nach wenigstens einem der Ansprüche 1 bis 5, **dadurch gekennzeichnet, dass** dem vorratsbehälter (1), zumindest dem zumindest einen Primär- und dem Sekundärwärmetauscher (9, 10) und dem Tränkeautomaten (6) und/oder der Entnahmestelle (8) Temperatursensoren (18) zugeordnet sind, die die jeweilige. Temperatur des flüssigen Nahrungsmittels und/oder der Trägerflüssigkeit im zumindest einen Primär- und/oder Sekundärwärmetauscher (9, 10) ermitteln und über eine Steuerung regeln.

7. Vorrichtung nach wenigstens einem der Ansprüche 4 bis 6, **dadurch gekennzeichnet, dass** das flüssige, gekühlte Nahrungsmittel aus dem Vorratsbehälter (1) bei einer Temperatur von etwa 5°C bis 8°C im ersten Primärwärmetauscher (9), insbesondere in der Vorheizspirale (12) auf eine Temperatur von etwa 20°C bis 30°C, und im zweiten anschliessenden Primärwärmetauscher (9) auf ca. 30°C bis 40°C, insbesondere 40°C erwärmbar ist.

8. Vorrichtung nach wenigstens einem der Ansprüche 4 bis 7, **dadurch gekennzeichnet, dass** das flüssige, vorgewärmte Nahrungsmittel aus der Vorheisspirale (12) des einen oder des letzten Primärwärmetauschers (9) in die Pasteurisierungsspirale (14) des Sekundärwärmetauschers (10) gelangt und im Sekundärwärmetauscher (10) auf eine Pasteurisierungstemperatur von etwa 75°C bis 85°C, insbesondere 80°C erwärmbar ist.

9. Vorrichtung nach wenigstens einem der Ansprüche 4 bis 8, **dadurch gekennzeichnet, dass** das flüssige, pasteurisierte Nahrungsmittel aus dem Sekundärwärmetauscher (10) in die Abkühlspirale (16) des einen oder des letzten Primärwärmetauschers (9) gelangt und durch Abgabe von Wärme auf eine Tränketemperatur von etwa 35°C bis 45°C, insbesondere 40°C abkühlbar ist, wobei durch die abgegebene Wärme der Sekundärwärmetauscher (10) auf eine Vorwärmtemperatur für die Vorheizspirale (12) von etwa 35°C bis 45°C, insbesondere 40°C erwärmbar ist.

10. Vorrichtung nach wenigstens einem der Ansprüche 1 bis 9, **dadurch gekennzeichnet, dass** dem zumindest einen Primärwärmetauscher (9) und/oder dem Sekundärwärmetauscher (10) zumindest ein Einlass (19) und ein Auslass (20) zugeordnet ist.

11. Vorrichtung nach Anspruch 10, **dadurch gekennzeichnet, dass** Einlass (19) und Auslass (20) entfernt voneinander jeweils im zumindest einen Primärwärmetauscher (9) oder jeweils im Sekundärwärmetauscher (10) vorgesehen sind.

12. Vorrichtung nach Anspruch 10 oder 11, **dadurch gekennzeichnet, dass** über den Einlass (19) oder Auslass (20) regelbare und steuerbare, gekühlte oder erwärmte Trägerflüssigkeit, insbesondere Wasser dem Primärwärmetauscher (9) und/oder Sekundärwärmetauscher (10) zur zusätzlichen Regelung des Kühl- oder vorwärmprozesses zuführbar ist.

13. Vorrichtung nach wenigstens einem der Ansprüche 4 bis 12, **dadurch gekennzeichnet, dass** im Bereich des Auslasses der vorheizspirale (12) und/oder Pasteurisierungsspirale (14) in diese zumindest ein Temperatursensor (18) eingesetzt ist, der die Temperatur kontrolliert bzw. misst und regelt ggf. die Temperatur über die Temperatur der Trägerflüssigkeit des Primärwärmetauschers 9 nach.

14. Vorrichtung nach wenigstens einem der Ansprüche 4 bis 12, **dadurch gekennzeichnet, dass** in einem ersten Bereich (21.1) im Sekundärwärmetauscher (10) das Nahrungsmittel auf Pasteurisierungstemperatur erwärmbar ist und über einen in die Pasteurisierungsspirale (14) eingesetzten Temperatursensor (18) am Ausgang des ersten aufgeheizten Bereiches (21.1) eine Pasteurisierungstemperatur ermittelbar und regelbar ist und in einem zweiten Bereich (21.2) in der Pasteurisierungsspirale (14) das Nahrungsmittel bei einer wählbaren Verweildauer verbleibt oder diese zur Erzielung einer gewünschten Pasteurisierungszeit durchströmt.

15. Vorrichtung nach wenigstens einem der Ansprüche 1 bis 14, **dadurch gekennzeichnet, dass** das Nahrungsmittel die Einrichtung (5), insbesondere den zumindest einen Primärwärmetauscher (9) und den Sekundärwärmetauscher (10) kontinuierlich oder pulsiert, in wählbaren Zeitabständen durchströmt.

16. Vorrichtung nach wenigstens einem der Ansprüche 3 bis 15, **dadurch gekennzeichnet, dass** zwischen einer Nahrungsmittelleitung (4) des ersten Primärwärmetauschers (9) und dem Vorratsbehälter (1) ein Bypass (22) eingesetzt pulsiert zu gewährleisten.

17. Vorrichtung nach wenigstens einem der Ansprüche 1 bis 16, **dadurch gekennzeichnet, dass** an jedem Primärwärmetauscher (9) eine Entnahme von Nahrungsmittel zu einer Entnahmestelle (8) und/oder zu einem Tränkeautomaten (6) od. dgl. Behälter, ggf. auch zur Kühlung ermöglicht ist.

## Claims

1. Device for supplying liquid feed for animals from a storage container (1) to an automatic drinking trough (6) or to a removal point (8), wherein between the storage container (1) and the automatic drinking trough (6) or the removal point (8) a device (5) is provided for heating and subsequently cooling the liquid feed, wherein after being heated to pasteurizing temperature and subsequently cooled in at least one primary heat exchanger (9) the liquid feed is feedable through a feed line (4) to the automatic drinking trough (6) and/or the removal point (8) and wherein the device (5) is formed by at least one primary and a secondary heat exchanger (9, 10), **characterized in that** associated with the primary and the secondary heat exchanger there is in each case at least one circulating device (3), wherein in the primary heat exchanger (9) a preheating spiral (12), is accommodated, which at one end is connected by the feed line (4) to the storage container (1) and at the other end runs via a connection line (13) into the secondary heat exchanger (10).

2. Device according to claim 1, **characterized in that** the liquid feed from the storage container (1) is heatable in the at least one primary heat exchanger (9) to a preheating temperature and in the secondary heat exchanger (10) to a pasteurizing temperature, wherein for subsequent cooling said liquid feed flows through the at least one primary heat exchanger (9) in order simultaneously to heat the carrier liquid thereof.

3. Device according to claim 1 or 2, **characterized in that** the feed is removable from the one or the other primary heat exchanger (9).

4. Device according to at least one of claims 1 to 3, **characterized in that** the connection line (13) is connected to a pasteurising spiral (14), which is run from the secondary heat exchanger (10) through a further connection line (15) into the at least one primary heat exchanger (9) and is connected there to a cooling spiral (16), to which the automatic drinking trough (6) and/or the removal point (8) is connected by a further feed line (4).

5. Device according to at least one of claims 1 to 4, **characterized in that** associated with the at least one primary and optionally the secondary heat exchanger (9, 10) there is in each case a heating device (17).

6. Device according to at least one of claims 1 to 5, **characterized in that** associated with the storage container (1), at least the at least one primary and the secondary heat exchanger (9, 10) and the automatic drinking trough (6) and/or the removal point (8) are temperature sensors (18), which determine and by means of a control unit control the respective temperature of the liquid feed and/or of the carrier liquid in the at least one primary and/or secondary heat exchanger (9, 10).

7. Device according to at least one of claims 4 to 6, **characterized in that** the liquid, cooled feed from the storage container (1) at a temperature of ca. 5°C to 8°C is heatable in the first primary heat exchanger (9), in particular in the preheating spiral (12) to a temperature of ca. 20°C to 30°C, and in the second subsequent primary heat exchanger (9) to ca. 30°C to 40°C, in particular 40°C.

8. Device according to at least one of claims 4 to 7, **characterized in that** the liquid, preheated feed passes from the preheating spiral (12) of the one or of the last primary heat exchanger (9) into the pasteurizing spiral (14) of the secondary heat exchanger (10) and is heatable in the secondary heat exchanger (10) to a pasteurizing temperature of ca. 75°C to 85°C, in particular 80°C.

9. Device according to at least one of claims 4 to 8, **characterized in that** the liquid, pasteurized feed passes from the secondary heat exchanger (10) into the cooling spiral (16) of the one or of the last primary heat exchanger (9) and is coolable by heat transfer to a drinking temperature of ca. 35°C to 45°C, in particular 40°C, wherein by means of the transferred heat the secondary heat exchanger (10) is heatable to a preheating temperature for the preheating spiral (12) of ca. 35°C to 45°C, in particular 40°C.

10. Device according to at least one of claims 1 to 9, **characterized in that** associated with the at least one primary heat exchanger (9) and/or the secondary heat exchanger (10) is at least one inlet (19) and one outlet (20).

11. Device according to claim 10, **characterized in that** inlet (19) and outlet (20) are provided remote from one another in each case in the at least one primary heat exchanger (9) or in each case in the secondary heat exchanger (10).

12. Device according to claim 10 or 11, **characterized in that** adjustable and controllable, cooled or heated carrier liquid, in particular water is feedable through the inlet (19) or outlet (20) to the primary heat exchanger (9) and/or secondary heat exchanger (10) for additional adjustment of the cooling or preheating process.

13. Device according to at least one of claims 4 to 12, **characterized in that** in the region of the outlet of the preheating spiral (12) and/or pasteurizing spiral (14) there is inserted into said spiral at least one temperature sensor (18) that monitors and/or measures the temperature and optionally readjusts the temperature by means of the temperature of the carrier liquid of the primary heat exchanger 9.

14. Device according to at least one of claims 4 to 12, **characterized in that** in a first region (21.1) in the secondary heat exchanger (10) the feed is heatable to pasteurizing temperature and by means of a temperature sensor (18) inserted into the pasteurizing spiral (14) at the output of the first heated region (21.1) a pasteurizing temperature is determinable and adjustable and in a second region (21.2) in the pasteurizing spiral (14) the feed remains for a selectable dwell period or flows through the pasteurizing spiral (14) to achieve a desired pasteurizing period.

15. Device according to at least one of claims 1 to 14, **characterized in that** the feed flows through the device (5), in particular the at least one primary heat exchanger (9) and the secondary heat exchanger (10) continuously or intermittently, at selectable time intervals.

16. Device according to at least one of claims 3 to 15, **characterized in that** between a feed line (4) of the first primary heat exchanger (9) and the storage container (1) a bypass (22) is inserted in order to guarantee cleaning by continuous or intermittent circulation.

17. Device according to at least one of claims 1 to 16, **characterized in that** at each primary heat exchanger (9) a removal of feed to a removal point (8) and/or to an automatic drinking trough (6) or similar container, optionally also for cooling purposes is allowed.

## Revendications

1. Dispositif pour mettre à disposition un aliment liquide destiné à des animaux d'un réservoir (1) vers un distributeur de boisson (6) ou un point de prélèvement (8), entre le réservoir (1) et le distributeur de boisson (6) ou le point de prélèvement (8) étant prévu un dispositif {5} destiné à échauffer et successivement refroidir l'aliment liquide, l'aliment liquide pouvant, après l'échauffement à température de pasteurisation et le refroidissement successif dans au moins un échangeur de chaleur primaire (9), être amené, par l'intermédiaire d'un conduit à aliment (4), au distributeur de boisson (6) et/ou au point de prélèvement (8) et le dispositif (5) étant constitué d'au moins un échangeur de chaleur primaire et d'un échangeur de chaleur secondaire (9, 10), **caractérisé par le fait qu'**à chacun parmi l'échangeur de chaleur primaire et l'échangeur de chaleur secondaire (9, 10) est associé au moins un dispositif de brassage (3), dans l'échangeur de chaleur primaire (9) étant placé un serpentin de préchauffage (12) qui est relié, à une extrémité, par l'intermédiaire du conduit à aliment (4), au réservoir (1) et, à l'autre extrémité, aboutit, par l'intermédiaire d'un conduit de connexion {13), dans l'échangeur de chaleur secondaire (10).

2. Dispositif selon la revendication 1, **caractérisé par le fait que** l'aliment liquide provenant du réservoir (1) peut être échauffé, dans au moins un échangeur de chaleur primaire (9), à une température de préchauffage et, dans l'échangeur de chaleur secondaire (10), à une température de pasteurisation, ce dernier circulant, pour le refroidissement successif, à travers l'au moins un échangeur de chaleur primaire (9) en vue de l'échauffement simultané de son fluide porteur.

3. Dispositif selon la revendication 1 ou 2, **caractérisé par le fait que** l'aliment peut être prélevé de l'un ou l'autre échangeur de chaleur primaire (9).

4. Dispositif selon au moins l'une des revendications 1 à 3, **caractérisé par le fait que** le conduit de connexion (13) se raccorde à un serpentin de pasteurisation (14) qui est mené, de l'échangeur de chaleur secondaire (10), par l'intermédiaire d'un autre conduit de connexion (15), vers l'au moins un échangeur de chaleur primaire (9) et s'y raccorde à un serpentin de refroidissement (16) auquel est raccordé, par l'intermédiaire d'un autre conduit à aliment (4), le distributeur de boisson (6) et/ou le point de prélèvement (8).

5. Dispositif selon au moins l'une des revendications 1 à 4, **caractérisé par le fait qu'**à chacun parmi l'au moins un échangeur de chaleur primaire et, éventuellement, l'échangeur de chaleur secondaire (9, 10) est associé un dispositif de chauffage (17).

6. Dispositif selon au moins l'une des revendications 1 à 5, **caractérisé par le fait qu'**au réservoir (1), au moins à l'au moins un échangeur de chaleur primaire et à l'échangeur de chaleur secondaire (9, 10) et au distributeur de boisson (6) et/ou au point de prélèvement (8) sont associés des capteurs de température (18) qui déterminent la température respective de l'aliment liquide et/ou du liquide porteur dans au moins un échangeur de chaleur primaire et/ou secondaire (9, 10) et la règulent par l'intermédiaire d'une commande.

7. Dispositif selon au moins l'une des revendications 4 à 6, **caractérisé par le fait que** l'aliment liquide refroidi provenant du réservoir (1) peut être échauffé à une température d'environ 5°C à 8°C dans le premier échangeur de chaleur primaire (9), en particulier dans le serpentin de préchauffage (12) à une température d'environ 20°C à 30°C et, dans le deuxième échangeur de chaleur primaire (9) qui suit, à environ 30°C à 40°C, en particulier à 40°C.

8. Dispositif selon au moins l'une des revendications 4 à 7, **caractérisé par le fait que** l'aliment liquide préchauffé provenant du serpentin de préchauffage (12) de l'un ou du dernier échangeur de chaleur primaire (9) arrive dans le serpentin de pasteurisation (14) de l'échangeur de chaleur secondaire (10) et peut être échauffé, dans l'échangeur de chaleur secondaire (10), à une température de pasteurisation d'environ 75°C à 85°C, en particulier de 80°C.

9. Dispositif selon au moins l'une des revendications 4 à 8, **caractérisé par le fait que** l'aliment liquide pasteurisé provenant de l'échangeur de chaleur secondaire (10) arrive dans le serpentin de refroidissement (16) de l'un ou du dernier échangeur de chaleur primaire (9) et peut être refroidi, par dégagement de chaleur, à une température de boisson d'environ 35°C à 45° C, en particulier de 40°C, l'échangeur de chaleur secondaire (10) pouvant être échauffé, par la chaleur dégagée, à une température de préchauffage du serpentin de préchauffage (12) d'environ 35°C à 45°C, en particulier de 40°C.

10. Dispositif selon au moins l'une des revendications 1 à 9, **caractérisé par le fait qu'**à l'au moins un échangeur de chaleur primaire (9) et/ou à l'échangeur de chaleur secondaire (10) sont associées au moins une entrée (19) et une sortie (20).

11. Dispositif selon la revendication 10, **caractérisé par le fait que** l'entrée (19) et la sortie (20) sont prévues distantes l'une de l'autre, chacune dans au moins un échangeur de chaleur primaire (9) ou chacune dans l'échangeur de chaleur secondaire (10).

12. Dispositif selon la revendication 10 ou 11, **caractérisé par le fait que** par l'intermédiaire de l'entrée (19) ou de la sortie (20) peut être amené, de manière régulable et réglable, du liquide porteur refroidi ou échauffé, en particulier de l'eau, vers l'échangeur de chaleur primaire (9) et ou vers l'échangeur de chaleur secondaire (10), en vue de la régulation additionnelle du processus de refroidissement ou de préchauffage.

13. Dispositif selon au moins l'une des revendications 4 à 12, **caractérisé par le fait qu'**à l'endroit de la sortie du serpentin de préchauffage (12) et/ou du serpentin de pasteurisation (14) est placé, dans ce dernier, au moins un capteur de température (18) qui contrôle ou mesure la température ou effectue éventuellement une régulation fine de la température du fluide porteur au-dessus de la température de l'échangeur de chaleur primaire (9).

14. Dispositif selon au moins l'une des revendications 4 à 12, **caractérisé par le fait que**, dans une première zone (21.1) dans l'échangeur de chaleur secondaire (10), la nourriture peut être échauffée à la température de pasteurisation et que par l'intermédiaire d'un capteur de température (18) placé dans le serpentin de pasteurisation (14) peut être déterminée et réglée, à la sortie de la première zone échauffée (21.1), une température de pasteurisation et que l'aliment séjourne dans une deuxième zone (21.2) dans le serpentin pendant une durée de séjour sélectionnable ou traverse cette dernière pour obtenir une durée de pasteurisation souhaitée.

15. Dispositif selon au moins l'une des revendications 1 à 14, **caractérisé par le fait que** la nourriture traverse le dispositif (5), en particulier l'au moins un échangeur de chaleur primaire (9) et l'échangeur de chaleur secondaire (10) en continu ou de manière pulsée à des intervalles sélectionnables.

16. Dispositif selon au moins l'une des revendications 3 à 15, **caractérisé par le fait qu'**entre un conduit à aliment (4) du premier échangeur de chaleur primaire (9) et le réservoir (1) est placé un contournement (22), pour assurer, en continu ou de manière pulsée, un nettoyage de circulation.

17. Dispositif selon au moins l'une des revendications 1 à 16, **caractérisé par le fait qu'**il est permis, à chaque échangeur de chaleur primaire (9), un prélèvement d'aliment vers un point de prélèvement (6) et/ou un distributeur de boisson (6) ou réservoir similaire, éventuellement aussi pour le refroidissement.
